# EUROPÄISCHE PATENTSCHRIFT

(11) **EP 3 511 108 B1**
(45) Veröffentlichungstag und Bekanntmachung des Hinweises auf die Patenterteilung: **13.01.2021**
(21) Anmeldenummer: 19151483.5
(22) Anmeldetag: 11.01.2019
(51) Int. Cl.: B23K 35/40, B23K 35/02, C23C 4/08, C23C 4/134, B22F 1/00, B22F 1/02, B23K 35/26, B23K 35/28, B23K 35/30, B23K 35/36

(54) **VERFAHREN ZUR HERSTELLUNG EINES LOTMITTELS**
METHOD FOR PRODUCING A SOLDERING AGENT
PROCÉDÉ DE FABRICATION D'UN MÉTAL D'APPORT DE BRASAGE

(30) Priorität: 12.01.2018 DE 102018100683
(43) Veröffentlichungstag der Anmeldung: 17.07.2019
(73) Patentinhaber: EMIL OTTO Flux- und Oberflächentechnik GmbH, 65346 Eltville (DE); Ionics SA, 4042 Liers (BE)
(72) Erfinder: Bremser, Andrè, 65239 Hochheim am Main (DE); Geßner, Markus, 65346 Eltville (DE)
(74) Vertreter: Meissner Bolte Partnerschaft mbB

(56) Entgegenhaltungen:
- WO-A1-2016/157357
- DE-A1-102005 013 729
- DE-A1-102007 007 212
- JP-A- 2017 024 074
- Doris Schulz: "Lösemittelfreies Lötverfahren für die Baugruppenfertigung | WOTech Technical Media | WOMag | WOClean", , 10. März 2015 (2015-03-10), XP055575717, Gefunden im Internet: URL:https://www.wotech-technical-media.de/ womag/ausgabe/2015/03/12_flussmittel_reinh ausen_plasma_03j2015/12_flussmittel_reinha usen_plasma_03j2015.php [gefunden am 2019-03-29]
- Andreas Reinhardt: "Prozess des Wellenlöten auf neuem Niveau", , 2. November 2017 (2017-11-02), XP055575715, Gefunden im Internet: URL:https://epp.industrie.de/technik/proze ss-des-wellenloeten-auf-neuem-niveau/ [gefunden am 2019-03-29]

## Beschreibung

Die Erfindung betrifft ein Verfahren zur Herstellung eines Lotmittels der im Oberbegriff des Anspruches 1 genannten Art.

Um beim Löten eine saubere, stoffschlüssige Verbindung zwischen Lotmaterial und der Oberfläche der Grundwerkstoffe herstellen zu können, wird in der Regel ein Flussmittel verwendet. Das Flussmittel verhindert, insbesondere beim Löten unter Lufteinwirkung, eine Oxidation der Oberfläche der Grundwerkstoffe, beseitigt vorhandene Oxidschichten und verringert darüber hinaus die Oberflächenspannung des flüssigen Lotmaterials. Häufig werden flussmittelgefüllte Röhrenlote verwendet, in denen das Flussmittel als Füllmasse (Seele) in einem Hohlraum innerhalb des Lotdrahtes enthalten ist. Diese flussmittelgefüllten Lotdrähte sind relativ einfach zu handhaben und werden daher in großem Umfang zum Weichlöten in der Elektrotechnik und Elektronik und anderen Bereichen eingesetzt.

Nachteilig an diesen Weichlotdrähten ist jedoch, dass Temperaturen von 130 bis 450°C zum Schmelzen des Lotmaterials erforderlich sind, und erst nach dem Schmelzen des äußeren Lotmaterials die dann bereits überhitzte Flussmittelseele erreicht wird. Dabei kommt es zu einer starken Rauchentwicklung und häufig zu vielen Flussmittelspritzern. Diese Spritzer können das Werkstück verunreinigen, die weitere Verarbeitung erschweren und die Lebensdauer des Endproduktes herabsetzen. Darüber hinaus besteht durch die Spritzer eine Verletzungsgefahr für den Anwender. Schließlich kann in diesen Lotdrähten die reduzierende Wirkung des Flussmittels erst nach dem Aufschmelzen des äußeren Lotmaterials zum Tragen kommen.

Darüber hinaus ist die Verfüllung des Lotdrahtes mit einem Flussmittel nicht immer möglich, z. B. wenn der Drahtdurchmesser keine Füllkanäle zulässt oder die Lotlegierung durch ihre mechanischen Eigenschaften nicht zur Verfüllung bearbeitbar ist.

Es ist daher wünschenswert, Lotmittel zu verwenden, in denen das Flussmittel vor der Lotlegierung aufgeschmolzen wird und an einer lokal begrenzten Anwendungsfläche reduzierend wirken kann, bevor durch die Lotlegierung eine Verbindung auf dem Werkstück hergestellt wird.

Zu diesem Zweck wurden in der Vergangenheit spezielle Lotmittel erdacht, in denen eine massive Form eines Weichlotmaterials mit einer äußeren, festhaftenden Beschichtung aus Flussmittel versehen ist. Solche Lotmittel werden z. B. in DE 10 2007 007 212 A1 beschrieben. Der Beschichtungsvorgang der massiven Form mit dem Flussmittel erfolgt hier, indem die massive Form in ein Tauchbad mit flüssigem Flussmittel eingetaucht wird (z.B. in WO 2016157357 A1) oder das Flussmittel aufgespritzt wird. Nachteilig an dieser Technik ist jedoch, dass nur relativ dicke Schichten von Flussmittel realisiert werden können. Darüber hinaus müssen zur Verringerung der Sprödigkeit des Flussmittels Weichmacher, wie Ester organischer Säuren, verwendet werden. Diese Weichmacher haben jedoch nur eine geringe Lebensdauer und meist karzinogene Eigenschaften. Das Arbeiten mit den Lotmitteln wird durch die somit erforderlichen Sicherheitsmaßnahmen erheblich verkompliziert.

In den Internetveröffentlichungen von D. Schulz ("Lösemittelfreies Lötverfahren für die Baugruppenfertigung WOTech Technical Media 1 WOMag 1 WOClean", 10. Marz 2015) und A. Reinhardt (Prozess des Wellenlöten auf neuem Niveau", 2. November 2017) werden Lötverfahren offenbart.

Daneben wurde in der Vergangenheit das Aufbringen von Flussmittel auf eine Lotlegierung mittels eines Heißklebstoffs ausgetestet. Dieses Verfahren hat jedoch den Nachteil, dass das erzeugte Lotmittel während des Lötprozesses eine starke und unangenehme Geruchsentwicklung zeigt und Rückstände des Klebstoffs auf dem Werkstück verbleiben.

Ein Beschichtungsverfahren mittels Plasmasystem wird in der JP 2017 024074 A beschrieben.

Es besteht daher ein Bedarf an Lötmitteln, bei deren Verwendung das Flussmittel vor dem Lotmaterial aufschmelzen und mit dem Werkstück in Kontakt kommen kann und die darüber hinaus schadstoffarm sind. Ferner besteht Bedarf an Lötmitteln, in denen die Dicke der außenliegenden Flussmittelschicht flexibel und genau an die geplante Verwendung angepasst werden kann.

### Beschreibung

Gelöst wird diese Aufgabe durch ein Verfahren zur Herstellung eines Lotmittels mit den Merkmalen von Anspruch 1. Insbesondere wird diese Aufgabe durch das Aufbringen des Flussmittels mittels eines Plasmastrahls gelöst. Dies hat den Vorteil, dass der Flussmittelauftrag sehr zielgerichtet erfolgen kann. Der besonders zielgerichtete Flussmittelauftrag führt zu einer Reduzierung der benötigten Flussmittelmenge, ermöglicht das gleichmäßige Beschichten von verschiedenen Formen und gleichzeitig eine flexible Variation der Dicke der Flussmittelschicht. Darüber hinaus sind die so erzeugten Lotmittel frei von Weichmachern und Klebstoffen, wodurch das Risiko für den Benutzer und der Arbeitsaufwand während des Lötens minimiert werden. Die so erzeugten Lotmittel sind elastisch, spulbar, langfristig lagerbar und nicht klebend.

In einem ersten Aspekt betrifft die Erfindung somit ein Verfahren zur Herstellung eines Lotmittels, dadurch gekennzeichnet, dass es Schritte umfasst, bei denen man a) ein Teil aus Lotmaterial bereitstellt, und b) Flussmittel mittels eines Plasmastrahls auf das Teil aus Lotmaterial aufbringt.

Lotmittel, die mittels des hierin beschriebenen Verfahrens hergestellt wurden bzw. herstellbar sind umfassen einen Kern bzw. Teil aus einem Lotmaterial, dessen äußere Oberfläche vollständig oder partiell, d.h. mindestens abschnittsweise, eine Flussmittelschicht aufweist. Diese Lotmittel sind dadurch gekennzeichnet, dass die Flussmittelschicht mittels eines Plasmastrahls auf die äußere Oberfläche aufgebracht wurde.

Das Lotmittel kann zum Weich- oder zum Hartlöten geeignet sein, wobei Lotmittel zum Weichlöten besonders bevorzugt sind.

Das mit dem erfindungsgemäßen Verfahren hergestellte Lotmittel kann eine beliebige Form aufweisen. Durch das präzise Aufbringen der äußeren Flussmittelschicht mittels eines Plasmastrahls können auch ungewöhnliche Teile mit einer Flussmittelschicht beschichtet werden. Dennoch weist das Lotmittel bevorzugt die Form von besonders gebräuchlichen Lotmitteln auf. So kann das Lotmittel ausgewählt sein aus der Gruppe bestehend aus Lotdraht, Lotband, Lotfolie, Lotstäbchen, Lotstange, Lotplatte und Lotformteilen. Bevorzugt ist das Lotmittel Lotdraht. Das Lotmittel kann jedoch auch andere nützliche Formen aufweisen.

Entsprechend kann das Teil aus einem Lotmaterial, das erfindungsgemäß mit dem Flussmittel beschichtet wird, ebenfalls verschiedene Formen aufweisen. Wenn das Lotmittel ein Lotdraht ist, dann wird das Teil aus einem Lotmaterial in der Regel ebenfalls eine Drahtform aufweisen, d. h. eine längliche, dünne Zylinderform. Um die Stabilität des Teils zu erhöhen, wird es üblicherweise massiv sein, d. h. keine Hohlräume aufweisen.

Das Teil aus Lotmaterial wird vor dem Schritt a) in einem Schritt a1) in bekannter Weise in die gewünschte, bevorzugt massive, Form gebracht. Geeignete Verfahren zur Herstellung von Formen aus Lotmaterial sind Fachleuten bekannt und umfassen z. B. Extrusion, Schmelzen, Stanzen, Ziehen und Pressen.

Erfindungsgemäß ist die Art des Lotmaterials nicht eingeschränkt. Das Lotmaterial kann ein Weichlotmaterial oder ein Hartlotmaterial sein. Dem Fachmann sind eine Vielzahl verschiedener Lotmaterialien für das Hart- und das Weichlöten bekannt. Solche im Stand der Technik bekannten Lotmaterialien aus unterschiedlichen Lotlegierungen sind geeignet, um in dem erfindungsgemäßen Verfahren verwendet zu werden. Erfindungsgemäß sind Lotmaterialien insbesondere Weichlotmaterialien nach EN ISO 9453-2006 oder Hartlotmaterialien nach EN ISO 3677:1995 und deren technisch bekannte Abwandlungen. In einer bevorzugten Ausführungsform ist das Lotmaterial ein Weichlotmaterial. Typische Lotmaterialien im Sinne der Erfindung, die für das Weichlöten geeignet sind, sind Lot-Nr.101, S-Sn63Pb37 (bleihaltig); Lot-Nr.301, S-Bi58 Sn42 (niedrigschmelzend bei 138°C, spröde); Lot-Nr.401, S-Sn99Cu1 (bleifrei, silberfrei); und Lot-Nr.701, S-Sn96Ag3Cu1 (Zinn-Silber-Kupfer, bleifrei, z. B. SAC305). Alternativ kann das Lotmaterial aber auch ein Hartlotmaterial sein. Typische Lotmaterialien im Sinne der Erfindung, die für das Hartlöten geeignet sind, sind Silberlote, wie L-Ag34Sn (34 % Ag, 36 % Cu, 27,5 % Zn, 2,5 % Sn), L-Ag44 (44 % Ag, 30 % Cu, 26 % Zn) und L-Ag55Sn (55 % Ag, 21 % Cu, 22 % Zn, 2 % Sn); Messinglote (Legierungen aus Kupfer und Zink mit geringen Zusätzen von Silber, Silicium, Zinn und Mangan), wie L-CuZn40 (60 % Cu, 39,7 % Zn, 0,3 % Si); und Hartlote für Aluminium, wie L-AlSi12 und L-ZnAl30.

In Schritt b) wird auf das Teil aus Lotmaterial mittels eines Plasmastrahls Flussmittel aufgebracht. Hierzu kann ein Plasmabrenner verwendet werden, der zur Beschichtung von Oberflächen geeignet ist. Bevorzugt verwendet der Plasmabrenner zur Erzeugung eines Plasmas Mikrowellenenergie. Solche Vorrichtungen sind z. B. aus DE 39 05 303 C2, US 5 349 154 A und DE 198 14 812 A1 bekannt. Um die Handhabung weiter zu vereinfachen, werden insbesondere Plasmabrenner verwendet, die Plasma unter atmosphärischen Bedingungen erzeugen und erhalten können. Geeignete Plasmabrenner sind Fachleuten bekannt und umfassen z. B. IonJET Plasmabrenner (IONICS). Diese verwenden Hochfrequenzsignale bei 2,54 GHz und arbeiten mit Mikrowellentechnologie. Sie haben den Vorteil, dass die Plasmaerzeugung besonders schonend und ohne Erzeugung eines Lichtbogens verläuft. Dadurch wird ein hochreiner Plasmastrahl an der Spitze der Elektrode bereitgestellt.

Geeignete Verfahren zur Erzeugung von Plasmastrahlen zur Verwendung in Schritt b) sowie geeignete Plasmabrenner sind Fachleuten bekannt. Bevorzugte Plasmastrahlen sind Strahlen aus Edelgas-Plasma.

Erfindungsgemäß wird das Flussmittel derart auf das Lotmaterial aufgebracht, dass Flussmittel und Lotmaterial eine feste Verbindung eingehen, d. h. zu einem massiven Lotmittel zusammengefügt werden. Erfindungsgemäß ist die Flussmittelschicht des Lotmittels somit fest. Dieses Lotmittel ist lager- und transportfähig. Hiervon zu differenzieren sind Prinzipien, die das Flussmittel unmittelbar auf die zu lötenden Teile aufbringen und erst anschließend das Lotmaterial hinzufügen. Die zu lötenden Teile werden somit in der Regel nicht von dem Lotmittel umfasst sein.

Fachleuten sind geeignete Flussmittel zur Verwendung in dem erfindungsgemäßen Verfahren bekannt. Jegliches Flussmittel ist für den erfindungsgemäßen Auftrag des Flussmittels mittels eines Plasmastrahls geeignet. Es können sowohl harzhaltige als auch harzfreie Flussmittel verwendet werden. Das Flussmittel enthält bevorzugt keine Weichmacher. Geeignete Flussmittel können z. B. Adipinsäure umfassen.

Das Flussmittel ist erfindungsgemäß vor seinem Eintritt in das Plasma des Plasmastrahls in Granulatform, vorzugsweise in Pulverform. Entsprechend des hierin beschriebenen Verfahrens kann das Flussmittel in einem Gasstrom in das Plasma hineintransportiert werden. Das granulat- bzw. pulverförmige Flussmittel weist eine für diesen Transport mittels eines Gasstroms ausreichend kleine Teilchengröße auf. So ist die Teilchengröße insbesondere klein genug, um von dem Gasstrom getragen zu werden. Bevorzugte Teilchengrößen liegen von 30 µm bis 60 µm (von 200 bis 300 Mesh).

Das Flussmittel in Schritt b) wird somit dem Plasmastrahl in Pulverform zugeführt. Der Begriff "Pulverform" umfasst auch Granulate, die eine größere Teilchengröße aufweisen, so lange diese Granulate wie oben beschrieben in einem Gasstrom transportiert werden können. Bevorzugt wird das Flussmittel dem Plasmastrahl z. B. mittels einer Edelgas-Strömung zugeführt. Das Edelgas (Inertgas) kann bevorzugt Argon sein. Weitere geeignete Inertgase sind Fachleuten bekannt. Die Fließgeschwindigkeit der Edelgas-Strömung kann von 0,25 L/min bis 5,00 L/min, vorzugsweise von 0,5 L/min bis 3 L/min betragen.

Bei dem Eintreten des Flussmittels in den Plasmastrahl wird das Flussmittel geschmolzen und mittels des Plasmastrahls auf die Oberfläche des Teils aus Lotmaterial transportiert. Hier lagert sich das Flussmittel auf der Oberfläche ab und erkaltet, sobald der Plasmastrahl nicht mehr auf die Ablagerungsstelle gerichtet wird.

Die Dicke der Flussmittelschicht kann variiert werden und besonders dünn sein. Das Aufbringen der Flussmittelschicht mittels Plasma ermöglicht diese Flexibilität in der Auftragungsdicke. Das Lotmittel kann eine Flussmittelschicht mit einer Schichtdicke von 1 bis 50 µm aufweisen, bevorzugt 1 bis 30 µm, besonders bevorzugt 1 bis 15 µm. Die Dicke der Flussmittelschicht kann insbesondere dadurch variiert werden, dass die Verweildauer des Plasmastrahls auf einem bestimmten Abschnitt der Oberfläche und/oder die Fließgeschwindigkeit des Edelgases variiert werden und/oder indem mehrere Beschichtungsschritte nacheinander durchgeführt werden.

Das durch das erfindungsgemäße Verfahren zu beschichtende Teil aus Lotmaterial wird auf diese Weise mindestens abschnittweise mit einer Flussmittelschicht bedeckt. Der Umfang der äußerlichen Abdeckung des Lotmaterials mit Flussmittel kann an die angestrebte Verwendung des Lotmittels angepasst werden. So ist es z. B. denkbar, einen Lotmaterial-Kern, z. B. eine Drahtform, vollständig mit einer Flussmittelschicht zu bedecken. Ein drahtförmiger Lotmaterial-Kern kann z.B. mit einer Flussmittelschicht umhüllt sein. Die Flussmittelschicht weist dann z. B. eine Hohlzylinderform auf. Es ist aber ebenfalls denkbar, den Lotmaterial-Kern nur einseitig mit einer Flussmittelschicht zu bedecken, z. B. nur an der Seite, die später dem zu verlötenden Material zugewandt sein soll. Da der Plasmastrahl einen besonders zielgerichteten Auftrag des Flussmittels ermöglicht, ist es auch denkbar, das Flussmittel nur in kleinen Bereichen zu platzieren. Die so erzeugten Lotmittel spritzen im Anwendungsfall nicht und ergeben sichere Lötverbindungen. Die verlöteten Produkte weisen darüber hinaus nur geringe Flussmittelrückstände auf.

### Kurze Beschreibung der Figuren

In den Zeichnungen sind Ausführungsbeispiele der Erfindung schematisch dargestellt. Es zeigen:
- **Fig. 1**: ein Lotmittel aus dem Stand der Technik;
- **Fig. 2**: eine Ausführungsform eines mit einem erfindungsgemäßen Verfahren hergestellten Lotmittels in der ein zylinderförmiger Kern aus einem Lotmaterial (ein Lotdraht) mit einer hohlzylinderförmigen Schicht aus einem Flussmittel umhüllt ist;
- **Fig. 3**: eine Ausführungsform eines mit einem erfindungsgemäßen Verfahren hergestellten Lotmittels in der ein schicht- bzw. stabförmiges Teil aus einem Lotmaterial (ein Lotformteil) mit einer Außenschicht aus einem Flussmittel beschichtet ist;
- **Fig. 4**: eine vereinfachte Schnittdarstellung des Kopfes eines Plasmabrenners, der zum erfindungsgemäßen Auftragen einer Flussmittelschicht auf einen Lotdraht verwendet werden kann; und
- **Fig. 5**: eine schematische Darstellung der Beschichtung eines Lotdrahtes mit einer Flussmittelschicht mittels eines Plasmastrahls.

### Ausführungsbeispiele

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Allerdings ist die Erfindung nicht auf diese Ausführungsbeispiele beschränkt.

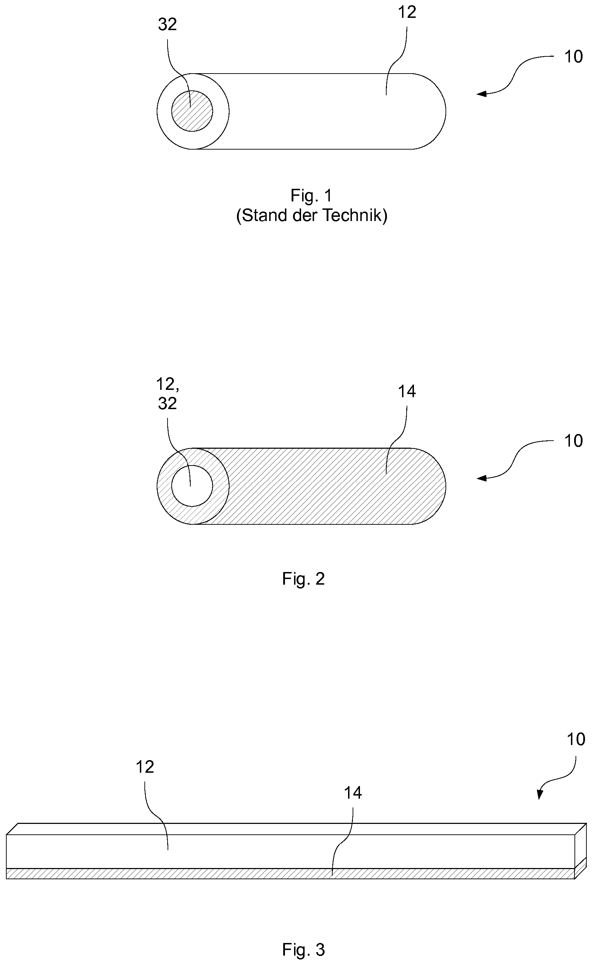

Fig. 1 zeigt einen Abschnitt eines Lotmittels 10 aus dem Stand der Technik. Das Lotmittel 10 ist als Lotdraht ausgebildet, von dem hier nur ein kurzer Abschnitt dargestellt ist. Das Lotmittel 10 umfasst ein hohlzylinderförmiges Teil 12, das aus einem Lotmaterial besteht. Der Innenraum des Hohlzylinders ist Flussmittel-verfüllt, das die Seele 32 des Lotmittels 10 bildet.

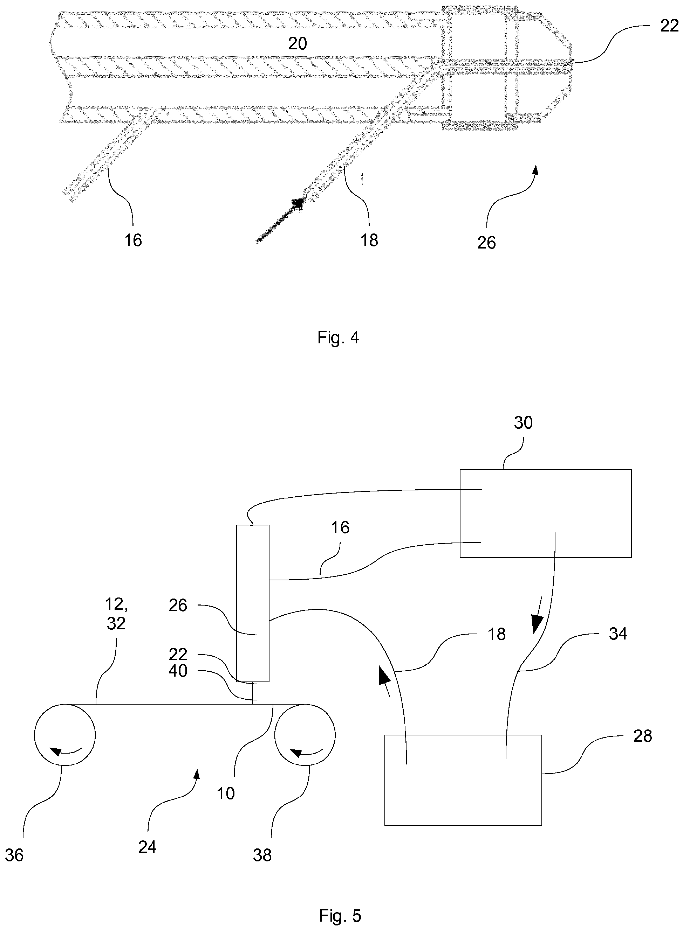

Fig. 2 zeigt eine Ausführungsform eines mit einem erfindungsgemäßen Verfahren hergestellten Lotmittels 10, in der ein zylinderförmiges Teil 12 aus einem Lotmaterial mit einer hohlzylinderförmigen Flussmittelschicht 14 umhüllt ist. Das Lotmittel 10 ist, wie das in Fig. 1 gezeigte Lotmittel, ebenfalls als Lotdraht ausgebildet, von dem hier nur ein kurzer Abschnitt dargestellt ist. Die Flussmittelschicht 14 wurde mittels eines Plasmabrenners der schematisch und beispielhaft in Fig. 4 und 5 gezeigten Art auf das Teil 12 aus Lotmaterial aufgetragen.

Fig. 3 zeigt eine Ausführungsform eines mit einem erfindungsgemäßen Verfahren hergestellten Lotmittels 10, in der ein flaches, längliches Formteil 12 aus einem Lotmaterial einseitig mit einer Flussmittelschicht 14 beschichtet ist. Die Flussmittelschicht 14 wurde mittels eines Plasmabrenners der schematisch und beispielhaft in Fig. 4 und 5 gezeigten Art auf das Teil 12 aus Lotmaterial aufgetragen.

Fig. 4 zeigt eine vereinfachte beispielhafte Schnittdarstellung des Kopfes 26 eines Plasmabrenners, der zum erfindungsgemäßen Auftragen einer Flussmittelschicht auf einen Lotdraht geeignet ist. Der Kopf 26 des Plasmabrenners weist ein hier nur angedeutetes Elektrodensystem 20 auf, das zum Erzeugen eines Plasmas an dem Ausgang 22 des Plasmabrenners geeignet ist. Darüber hinaus weist der Plasmabrenner eine Zufuhr 16 für Kühlgas auf. Durch diese Zufuhr kann ein Kühlgas, wie z. B. Luft, eingeleitet werden, das dem Kühlen der Elektrode dient. Daneben weist der Plasmabrenner eine Zufuhr 18 für ein Edelgas auf, durch die ein Edelgasstrom in den Plasmastrahl eingelenkt werden kann. Dieser Edelgasstrom umfasst auch das Flussmittelpulver.

Fig. 5 zeigt eine schematische Darstellung der Beschichtung eines Lotmittels 10, das hier als Lotdraht ausgebildet ist, mit einer Flussmittelschicht mittels eines Plasmastrahls. Dies ist ein beispielhafter Versuchsaufbau, bei dem mittels eines Rolle-zu-Rolle-Prinzips Draht beschichtet werden kann, der auf einer Spule aufgewickelt ist. Der Kopf 26 des Plasmabrenners wird über eine Steuerungseinheit 30 gesteuert. Diese leitet dem Plasmabrenner über eine Zufuhr 16 ein Kühlgas zu, das in diesem Falle Luft ist. Ferner leitet die Steuerungseinheit ein Edelgas, hier Argon, über eine Edelgasleitung 34 in ein Flussmittelpulver-Reservoir 28 ein. Das Flussmittelpulver-Reservoir 28 umfasst ein Flussmittelpulver, das verwirbelt wird und von der Edelgasströmung durch die Zufuhr 18 in den Kopf 26 des Plasmabrenners hineingeleitet und dem Plasmastrahl 40 zugeführt wird. Aus dem Ausgang 22 erstreckt sich der Plasmastrahl 40 bis hin zu dem Lotmittel 10. Die Pfeile zeigen die Fließrichtung des Edelgases an. Ein drahtförmiges (zylindrisches), erfindungsgemäß zu beschichtendes Teil 12 aus Lotmaterial wird über zwei Rollen gewickelt, wobei das Teil 12 kontinuierlich während der Beschichtung von einer ersten Rolle 36 abgewickelt und nach seiner Beschichtung mit einer Flussmittelschicht mittels des Plasmastrahls 40 auf eine zweite Rolle 38 aufgewickelt wird. Der mit dem Flussmittel beschichtete Draht, d. h. das Lotmittel 10, ist so flexibel, dass er ohne Platzen der Flussmittelschicht auf die zweite Rolle 38 aufspulbar ist. Auch nach längerer Lagerung erfolgt kein Verkleben der Drähte/Abschnitte des Lotmittels 10 untereinander.

### Versuchsbeschreibung: Herstellung des in Fig. 2 gezeigten Lotmittels

Zum Auftragen des Flussmittels und Herstellen des in Fig. 2 gezeigten Lotmittels 10 wurde wie folgt vorgegangen (Bezugszeichen beziehen sich auch auf die in Fig. 5 dargestellte Versuchsanordnung):
Die Versuchsanordnung entsprach der rechten Hälfte der Fig. 5, während sich die Beweglichkeit von Plasmabrenner zu dem zu beschichtenden Teil von dem in Fig. 5 dargestelltem Aufbau unterschied. Im Gegensatz zu dem dortigen Aufbau wurden die zu beschichtenden Teile 12 auf einem XY-Tisch fixiert, der relativ zum Plasmabrenner bewegt wurde.

Das Plasma wurde bei 90 bis 110 Watt entzündet und erhalten. Anschließend wurde der Argonfluss durch die Edelgasleitung 34 in das Flussmittelpulver-Reservoir 28 eingeleitet. Das Flussmittelpulver-Reservoir 28 enthielt Flussmittel in Pulverform. Das Pulver wurde aufgewirbelt und im Gas suspendiert, sodass es mit dem Argonstrom aus dem Flussmittelpulver-Reservoir 28 durch die Zufuhr 18 hinausgetragen wurde. Der Argonstrom wurde mit Flussraten von 0,5 bis 3 L/min betrieben, während die Flussrate des Kühlluftstromes 2 bis 3 L/min betrug. Das Pulver durchströmte das Plasma, das am Ende der Düse entzündet worden war (d. h. am Ausgang 22). Aufgrund der hohen Temperatur des Plasmas wurde das Pulver im Plasmastrahl 40 geschmolzen und lagerte sich auf dem sich vor der Düse befindenden Teil 12 aus Lotmaterial ab.

Als hier nicht dargestellte Beispielteile wurden 20 cm lange Drähte aus einem Lotmaterial auf einem XY-Tisch fixiert und mittels des oben beschriebenen Plasmabrenners mit einem Flussmittel beschichtet. Die Bewegungsgeschwindigkeit des Tisches unter der Düse wurde auf 20 mm/s festgelegt. Jeder Draht wurde zweimal von jeder Seite beschichtet. Die hierdurch erzeugte Flussmittelschicht wies eine Dicke von 10 µm auf.

Das hierin beschriebene Verfahren wurde mit einer Vielzahl verschiedener Flussmittel erfolgreich getestet, darunter sowohl harzhaltige als auch harzfreie Flussmittel.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen oder andersartige Kombinationen der vorgestellten Einzelmerkmale verwirklicht werden können, sofern der Schutzbereich der beigefügten Ansprüche nicht verlassen wird. Die vorliegende Offenbarung schließt sämtliche Kombinationen der vorgestellten Einzelmerkmale ein.

## Patentansprüche

1. Verfahren zur Herstellung eines Lotmittels (10), **dadurch gekennzeichnet, dass** es Schritte umfasst, bei denen man
a) ein Teil (12) aus Lotmaterial bereitstellt, und
b) Flussmittel mittels eines Plasmastrahls auf das Teil (12) aus Lotmaterial aufbringt,
wobei das Flussmittel vor seinem Eintritt in das Plasma in Granulatform vorliegt.

2. Verfahren nach Anspruch 1, **dadurch gekennzeichnet, dass** das Flussmittel in Schritt b) dem Plasmastrahl in Pulverform zugeführt wird.

3. Verfahren nach einem der vorangehenden Ansprüche, **dadurch gekennzeichnet, dass** das Flussmittel in Schritt b) dem Plasmastrahl mittels einer Edelgas-Strömung zugeführt wird, wobei das Edelgas vorzugsweise Argon ist.

4. Verfahren nach einem der vorangehenden Ansprüche, **dadurch gekennzeichnet, dass** das Lotmittel (10) ausgewählt ist aus der Gruppe bestehend aus Lotdraht, Lotband, Lotfolie, Lotstäbchen, Lotstange und Lotformteil, vorzugsweise Lotdraht.

5. Verfahren nach einem der vorangehenden Ansprüche, **dadurch gekennzeichnet, dass** das Lotmaterial ein Weichlot- oder Hartlotmaterial ist.

6. Verfahren nach einem der vorangehenden Ansprüche, **dadurch gekennzeichnet, dass** das Flussmittel keine Weichmacher enthält.

## Claims

1. A method for producing a soldering agent (10), **characterised in that** it comprises steps, in the case of which
a) a part (12) made of soldering material is provided, and
b) fluxing agent is applied to the part (12) made of soldering material by means of a plasma jet,
wherein the fluxing agent is present in granular form prior to its entry into the plasma.

2. The method according to Claim 1, **characterised in that** the fluxing agent is supplied in powder form to the plasma jet in step b).

3. The method according to any one of the preceding claims, **characterised in that** the fluxing agent is supplied to the plasma jet in step b) by means of a noble gas flow, wherein the noble gas is preferably argon.

4. The method according to any one of the preceding claims, **characterised in that** the soldering agent (10) is selected from the group consisting of solder wire, solder strip, solder foil, small solder rod, solder stick, and solder preform, preferably solder wire.

5. The method according to any one of the preceding claims, **characterised in that** the solder material is a soft solder or hard solder material.

6. The method according to any one of the preceding claims, **characterised in that** the fluxing agent does not contain any softening agents.

## Revendications

1. Procédé de fabrication d'un matériau de brasage (10), **caractérisé en ce qu'**il comprend des étapes lors desquelles
a) on met à disposition une pièce (12) en matériau de brasage, et
b) on applique au moyen d'un jet de plasma un agent de fluxage sur la pièce (12) en matériau de brasage, l'agent de fluxage étant mis à disposition sous forme de granulé avant son introduction dans le jet de plasma.

2. Procédé selon la revendication 1, **caractérisé en ce que,** lors de l'étape b), l'agent de fluxage est introduit dans le jet de plasma sous forme pulvérulente.

3. Procédé selon l'une des revendications précédentes, **caractérisé en ce que,** lors de l'étape b), l'agent de fluxage es introduit dans le jet de plasma par un courant de gaz rare, le gaz rare étant de préférence de l'argon.

4. Procédé selon l'une des revendications précédentes, **caractérisé en ce que** le matériau de brasage (10) est choisi dans le groupe constitué de produits sous forme de fil, de ruban, de feuille, de tige, de barre ou de pièce préformée, et de préférence sous forme de fil d'apport.

5. Procédé selon l'une des revendications précédentes, **caractérisé en ce que** le matériau de brasage est un matériau pour brasage tendre ou pour brasage fort.

6. Procédé selon l'une des revendications précédentes, **caractérisé en ce que** l'agent de fluxage ne contient pas de plastifiant.
